# EUROPÄISCHE PATENTSCHRIFT

(11) **EP 2 501 916 B1**
(45) Veröffentlichungstag und Bekanntmachung des Hinweises auf die Patenterteilung: **22.08.2018**
(21) Anmeldenummer: 10773004.6
(22) Anmeldetag: 14.10.2010
(51) Int. Cl.: F02D 41/20, F02M 59/36, F02D 41/06

(54) **VERFAHREN UND VORRICHTUNG ZUR ANSTEUERUNG EINES MENGENSTEUERVENTILS**
METHOD AND DEVICE FOR ACTUATING AN AMOUNT CONTROL VALVE
PROCÉDÉ ET DISPOSITIF POUR L'ACTIONNEMENT D'UNE SOUPAPE DE COMMANDE DE QUANTITÉ

(30) Priorität: 18.11.2009 DE 102009046825
(43) Veröffentlichungstag der Anmeldung: 26.09.2012
(73) Patentinhaber: Robert Bosch GmbH, 70442 Stuttgart (DE)
(72) Erfinder: WILMS, Rainer, 71706 Markgroeningen (DE); SCHUMACHER, Matthias, 71287 Weissach (DE); KUEMPEL, Joerg, 70567 Stuttgart (DE); MAESS, Matthias, 71034 Boeblingen (DE)
(86) Internationale Anmeldenummer: PCT/EP2010/065383
(87) Internationale Veröffentlichungsnummer: WO 2011/061017

(56) Entgegenhaltungen:
- WO-A1-2006/060545
- WO-A1-2010/066663
- WO-A1-2010/072536
- DE-A1- 10 148 218
- DE-A1-102007 035 316
- DE-A1-102009 026 690
- US-A- 5 975 053
- US-A1- 2002 170 539
- US-A1- 2009 235 900

## Beschreibung

### Stand der Technik

Die Erfindung betrifft ein Verfahren zur Ansteuerung eines Mengensteuerventils nach dem Oberbegriff des Anspruchs 1. Gegenstand der Erfindung sind ferner ein Computerprogramm, ein elektrisches Speichermedium sowie eine Steuer- und Regeleinrichtung.

Die DE 101 48 218 A1 beschreibt ein Verfahren zum Betreiben eines Kraftstoffeinspritzsystems unter Nutzung eines Mengensteuerventils. Das bekannte Mengensteuerventil ist als ein durch eine Magnetspule elektromagnetisch betätigtes Magnetventil mit einem Magnetanker und zugeordneten Wegbegrenzungsanschlägen realisiert. Vom Markt her bekannt sind solche Mengensteuerventile, welche im stromlosen Zustand der Magnetspule geschlossen sind. Im diesem Fall wird zum Öffnen des Mengensteuerventils die Magnetspule mit einer konstanten Spannung oder einer getakteten Spannung (Pulsweitenmodulation - "PWM") angesteuert, wodurch der Strom in der Magnetspule in charakteristischer Weise ansteigt. Nach dem Abschalten der Spannung fällt der Strom wiederum in charakteristischer Weise ab, wodurch das Mengensteuerventil schließt. Ebenfalls bekannt sind Magnetventile, die im bestromten Zustand der Spule offen sind. Bei diesen Magnetventilen wird entsprechend verfahren, wobei beim Abschalten der Spannung und dem charakteristischen Abfallen des Stroms das Magnetventil öffnet.

Um bei dem in der DE 101 48 218 A1 gezeigten stromlos geschlossenen Ventil zu verhindern, dass der Anker während der Öffnungsbewegung des Mengensteuerventils mit voller Geschwindigkeit am Anschlag anschlägt, was zu einer deutlichen Geräuschentwicklung führen könnte, wird die elektromagnetische Betätigungseinrichtung kurz vor dem Ende der Öffnungsbewegung nochmals impulsartig bestromt. Durch diesen Stromimpuls wird eine Bremskraft auf den Anker ausgeübt, noch bevor dieser den Anschlag kontaktiert. Durch die Bremskraft wird die Geschwindigkeit reduziert, wodurch das Anschlaggeräusch vermindert wird.

Da die Eigenschaften des Mengensteuerventils von Exemplar zu Exemplar unterschiedlich sind, ist es zu einer möglichst effektiven Minderung des Anschlaggeräuschs vorteilhaft, wenn die Wirkung der Bestromung nicht von den Exemplareigenschaften abhängt.

Aus der nicht vorveröffentlichten DE 10 2008 054 512 wird für die Ansteuerung eines von einer elektromagnetischen Betätigungseinrichtung betätigten Mengensteuerventils vorgeschlagen, dass mindestens ein Parameter des Bremsimpulses die Exemplareigenschaften angepasst wird.

Dieses Verfahren stellt jedoch hohe Anforderungen an die Steuer-/Regeleinrichtung, auf der es implementiert ist. Zur Reduktion der Anforderungen an die Steuer-/Regeleinrichtung ist ein weniger aufwändiges Verfahren wünschenswert.

Ein weiteres Verfahren zur Ansteuerung eines Mengensteuerventils ist aus der WO 2006/060545 bekannt.

### Offenbarung der Erfindung

Die Erfindung betrifft ein Mengensteuerventil das bei Ansteuerung mit einem ersten Ansteuerungswert einen geschlossenen Zustand einnimmt und die Ansteuerung mit einem zweiten Ansteuerungswert dem Mengensteuerventil ermöglicht, einen geöffneten Zustand einzunehmen..

Die erfindungsgemäße Ansteuerung, bei der das Ansteuersignals von einem ersten Signalwert zu einem ersten Zeitpunkt zu einem zweiten Signalwert zu einem zweiten Zeitpunkt abfällt ermöglicht ein besonders einfaches, robustes Verlangsamen der Öffnungsbewegung des Mengensteuerventils.

Um die Öffnungsbewegung des Mengensteuerventils bis zum vollständigen Öffnen des Mengensteuerventils kontrollieren zu können, ist es vorteilhaft, dass das Ansteuersignal von diesem zweiten Signalwert zu diesem zweiten Zeitpunkt zum zweiten Ansteuerungswert zu einem dritten Zeitpunkt abfällt.

Um die Öffnungsbewegung robust gegenüber variierenden Exemplareigenschaften zu gestalten, ist es vorteilhaft, dass für Ansteuersignale oberhalb des ersten Signalwerts das Mengensteuerventil im geschlossenen Zustand ist, da somit für alle Exemplare des Mengensteuerventils erfindungsgemäß sichergestellt ist, dass sie sich im geschlossenen Zustand befinden.

Um die Öffnungsbewegung robust gegenüber variierenden Exemplareigenschaften zu gestalten, ist es vorteilhaft, dass für Ansteuersignale unterhalb des zweiten Signalwerts das Mengensteuerventil nicht im geschlossenen Zustand ist, da somit für alle Exemplare des Mengensteuerventils erfindungsgemäß sichergestellt ist, dass ihnen erlaubt wird, sich zu öffnen.

Um die Öffnungsbewegung robust gegenüber variierenden Exemplareigenschaften zu gestalten, ist es vorteilhaft, dass Ansteuersignale unterhalb des zweiten Ansteuerungswert dem Mengensteuerventil ermöglichen, den geöffneten Zustand einzunehmen, da somit für alle Exemplare des Mengensteuerventils erfindungsgemäß sichergestellt ist, dass ihnen erlaubt wird, den geöffneten Zustand einzunehmen.

Der hohe Druck im Förderraum hält das Mengensteuerventil in seinem geschlossenen Zustand. Um die Verlustleistung zu begrenzen, ist es vorteilhaft, wenn das Ansteuersignal vom Zeitpunkt des Schließens des Mengensteuerventils bis zum ersten Zeitpunkt zeitweise unterhalb des zweiten Ansteuerungswerts liegt.

Um die Ansteuerung besonders einfach zu gestalten ist es vorteilhaft, wenn das Ansteuersignal vom Zeitpunkt des Schließens des Mengensteuerventils bis zum ersten Zeitpunkt dauerhaft über dem zweiten Ansteuerungswert liegt.

Ist der zeitliche Abstand zwischen dem dritten Zeitpunkt und dem zweiten Zeitpunkt um einen ersten Faktor länger als die Zeit, die das Mengensteuerventils bei einem Ansteuersignal unterhalb des zweiten Ansteuerungswerts benötigt, um vom geschlossenen Zustand in den geöffneten Zustand überzugehen, so ist sichergestellt, dass der fallende Verlauf des Ansteuersignals hinreichend flach ist, um eine wirksame Verlangsamung der Öffnungsbewegung des Mengensteuerventils zu bewirken.

Ist der zeitliche Abstand zwischen dem zweiten Zeitpunkt und dem ersten Zeitpunkt um einen zweiten Faktor länger als die Zeit, die das Mengensteuerventils bei einem Ansteuersignal unterhalb des zweiten Ansteuerungswert benötigt, um vom geschlossenen Zustand in den geöffneten Zustand überzugehen, so ist sichergestellt, dass der fallende Verlauf des Ansteuersignals hinreichend flach ist, um eine wirksame Verlangsamung der Öffnungsbewegung des Mengensteuerventils zu bewirken.

Um zu verhindern, dass zu dem Zeitpunkt, an dem das Mengensteuerventil nicht mehr durch den Druck im Förderraum in seiner geschlossenen Position gehalten wird, auf den Betätigungsstößel des Mengensteuerventils durch die Aktorik eine zu geringe Kraft ausgeübt wird, ist es vorteilhaft, wenn der erste Zeitpunkt und/oder der zweite Zeitpunkt hinter einem obern Totpunkt einer Hochdruckpumpe oder dem Zeitpunkt des Öffnens eines Auslassventils liegt.

Das erfindungsgemäße Verfahren lässt sich in besonders einfacher Weise realisieren, wenn das Mengensteuerventil mit einer elektromagnetischen Aktorik kombiniert ist, und der erste Ansteuerungswert des Ansteuersignals einem bestromten Zustand der Aktorik entspricht und der zweite Ansteuerungswert (64) des Ansteuersignals einem unbestromten Zustand.

Das erfindungsgemäße Verfahren ist als umsetzbare Maßname kostengünstig, da keine zusätzlichen Stückkosten entstehen.

Nachfolgend werden Ausführungsformen der Erfindung unter Bezugnahme auf die beiliegende Zeichnung näher erläutert. In der Zeichnung zeigen:
- Figur 1: eine schematische Darstellung eines Kraftstoffeinspritzsystems einer Brennkraftmaschine mit einer Hochdruckpumpe und einem Mengensteuerventil;
- Figur 2: eine schematische Darstellung verschiedener Funktionszustände der Hochdruckpumpe und des Mengensteuerventils von Figur 1 mit einem zugehörigen Zeitdiagramm;
- Figur 3: eine schematische Darstellung des Zusammenhangs zwischen dem Ansteuersignal und dem Zustand des Mengensteuerventils
- Figur 4: eine schematische Darstellung des zeitlichen Verlaufs des Ansteuersignals
- Figur 5: eine zweite schematische Darstellung des zeitlichen Verlaufs des Ansteuersignals und des zeitlichen Verlaufs des Zustands des Mengensteuerventils

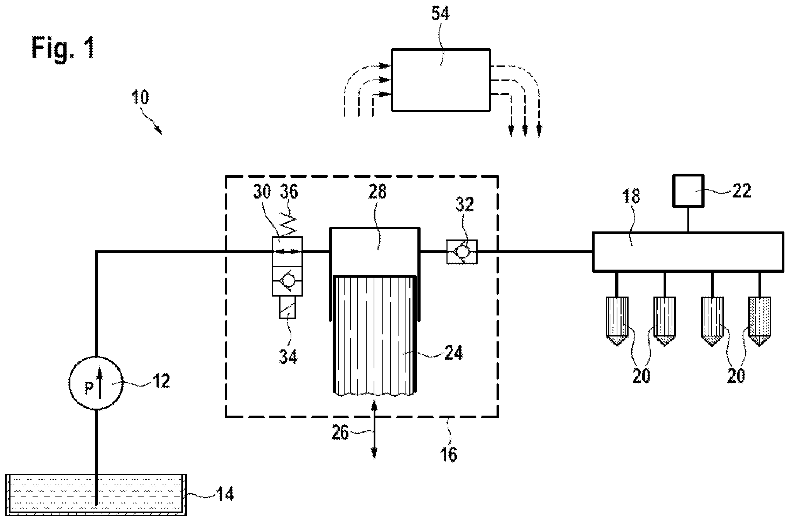

Ein Kraftstoffeinspritzsystem trägt in Figur 1 insgesamt das Bezugszeichen 10. Es umfasst eine elektrische Kraftstoffpumpe 12, mit der Kraftstoff aus einem Kraftstofftank 14 zu einer Hochdruckpumpe 16 gefördert wird. Die Hochdruckpumpe 16 verdichtet den Kraftstoff auf einen sehr hohen Druck und fördert ihn weiter in ein Kraftstoffrail 18. An dieses sind mehrere Injektoren 20 angeschlossen, die den Kraftstoff in ihnen zugeordnete Brennräume einspritzen. Der Druck im Kraftstoffrail 18 wird von einem Drucksensor 22 erfasst.

Bei der Hochdruckpumpe 16 handelt es sich um eine Kolbenpumpe mit einem Förderkolben 24, der von einer nicht gezeigten Nockenwelle in eine Hin- und Herbewegung (Doppelpfeil 26) versetzt werden kann. Der Förderkolben 24 begrenzt einen Förderraum 28, der über ein Mengensteuerventil 30 mit dem Auslass der elektrischen Kraftstoffpumpe 12 verbunden werden kann. Über ein Auslassventil 32 kann der Förderraum 28 ferner mit dem Kraftstoffrail 18 verbunden werden.

Das Mengensteuerventil 30 umfasst beispielsweise eine elektromagnetische Betätigungseinrichtung 34, die im bestromten Zustand gegen die Kraft einer Feder 36 arbeitet. In der Form des Ausführungsbeispiels ist das Mengensteuerventil 30 im stromlosen Zustand offen, im bestromten Zustand hat es die Funktion eines normalen Einlass- Rückschlagventils.

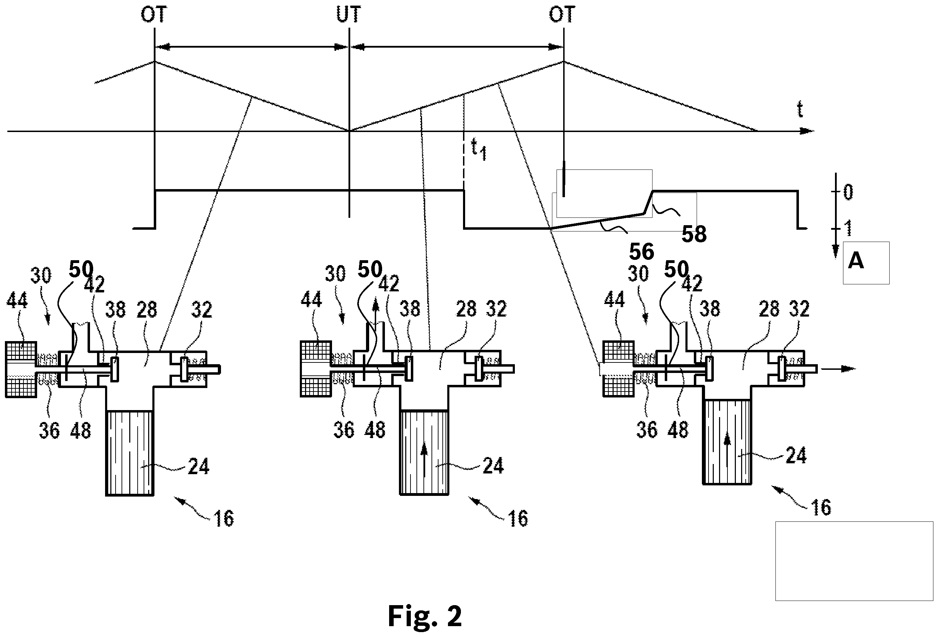

Die Hochdruckpumpe 16 und das Mengensteuerventil 30 arbeiten folgendermaßen (siehe Figur 2):
In Figur 2 sind oben ein Hub des Kolbens 34 und darunter ein Ansteuersignal über der Zeit aufgetragen. Das Ansteuersignal ist mit dem Bezugszeichen "A" bezeichnet. Der Wert des Ansteuersignals befindet sich zwischen einem ersten Ansteuerwert, der in Figur 2 mit "0" bezeichnet ist, und einem zweiten Ansteuerwert, der in Figur 2 mit "1" bezeichnet ist. Beispielsweise entspricht der erste Ansteuerwert dem unbestromten Zustand der elektromagnetischen Betätigungseinrichtung 34, und der zweite Wert dem bestromten Zustand. Im Folgenden wird von diesem Ausführungsbeispiel ausgegangen.

Außerdem ist die Hochdruckpumpe 16 in verschiedenen Betriebszuständen schematisch gezeigt. Während eines Saughubs (linke Darstellung in Figur 2) ist die Magnetspule 44 stromlos, wodurch der Betätigungsstößel 48 durch die Feder 36 gegen das Ventilelement 38 gedrückt wird und dieses in seine geöffnete Stellung bewegt. Auf diese Weise kann Kraftstoff von der elektrischen Kraftstoffpumpe 12 in den Förderraum 28 strömen. Nach dem Erreichen des unteren Totpunktes UT beginnt der Förderhub des Förderkolbens 24. Dies ist in Figur 2 in der Mitte dargestellt. Die Magnetspule 44 ist weiter stromlos, wodurch das Mengensteuerventil 30 weiterhin zwangsweise geöffnet ist. Der Kraftstoff wird vom Förderkolben 24 über das geöffnete Mengensteuerventil 30 zur elektrischen Kraftstoffpumpe 12 ausgestoßen. Das Auslassventil 32 bleibt geschlossen. Eine Förderung in das Kraftstoffrail 18 findet nicht statt. Zu einem Zeitpunkt t1 wird die Magnetspule 44 bestromt, wodurch der Betätigungsstößel 48 vom Ventilelement 38 weggezogen wird. Dabei sei an dieser Stelle darauf hingewiesen, dass in Figur 2 der Verlauf der Bestromung der Magnetspule 44 nur schematisch dargestellt ist. Es sei angemerkt, dass der tatsächliche Spulenstrom nicht konstant, sondern aufgrund von Gegeninduktionseffekten unter Umständen abfallend. Bei einer pulsweitenmodulierten Ansteuerspannung ist darüber hinaus der Spulenstrom wellen- bzw. zackenförmig.

Durch eine Variation des Zeitpunktes t1 wird die von der Hochdruckpumpe 16 zum Kraftstoffrail 18 geförderte Kraftstoffmenge beeinflusst. Der Zeitpunkt t1 wird von einer Steuer- und Regeleinrichtung 54 (Figur 1) so festgelegt, dass ein Istdruck im Kraftstoffrail 18 möglichst genau einem Solldruck entspricht. Hierzu werden in der Steuer- und Regeleinrichtung 54 vom Drucksensor 22 gelieferte Signale verarbeitet.

Aufgrund des Drucks im Förderraum 28 legt sich das Ventilelement 38 an den Ventilsitz 42 an, das Mengensteuerventil 30 ist also geschlossen. Nun kann sich im Förderraum 28 ein Druck aufbauen, der zu einem Öffnen des Auslassventils 32 und zu einer Förderung in das Kraftstoffrail 18 führt. Dies ist in Figur 2 ganz rechts dargestellt. Kurz nach dem Erreichen des oberen Totpunktes OT des Förderkolbens 24 wird die Bestromung der Magnetspule 44 beendet, wodurch das Mengensteuerventil 30 wieder in seine zwangsweise geöffnete Position gelangt.

Beim Beenden der Bestromung der Magnetspule 44 wird der Betätigungsstößel 48 gegen einen ersten Anschlag 50 bewegt. Um die Auftreffgeschwindigkeit am ersten Anschlag 50 zu reduzieren, wird ein fallender Signalverlauf 56 erzeugt, durch die die Bewegungsgeschwindigkeit des Betätigungsstößels 48 vor dem Auftreffen auf den ersten Anschlag 50 reduziert wird. Während eines zweiten fallenden Signalverlaufs 58 wird das Ansteuersignal auf den ersten Ansteuerungswert gebracht. Dieser zweite fallende Signalverlauf 58 kann beispielsweise durch eine Schnelllöschung des Spulenstroms der elektromagnetischen Betätigungseinrichtung 34 gegeben sein.

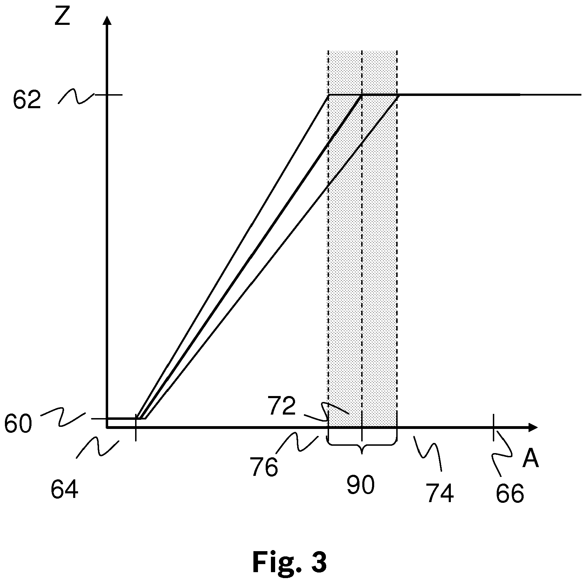

Nun wird auf Figur 3 Bezug genommen: In dieser ist der Zusammenhang zwischen dem mit "A" bezeichneten Ansteuersignal und dem mit "Z" bezeichneten Zustand des Mengensteuerventils 30 dargestellt. Der Zustand ist im Ausführungsbeispiel charakterisiert durch einen Hub des Betätigungsstößels 38. Im Ausführungsbeispiel entspricht ein Wert des Ansteuersignals einer durch die elektromagnetische Betätigungseinrichtung 34 ausgeübten Kraft auf den Betätigungsstößel 38, und damit einem Hub des Betätigungsstößels 38, mithin einem Zustand des Mengensteuerventils 30. Bei einem ersten Ansteuerungswert 66 (im Ausführungsbeispiel z.B. entsprechend dem bestromten Zustand der elektromagnetischen Betätigungseinrichtung 34) ist das Mengensteuerventil 30 im geschlossenen Zustand 62, bei einem zweiten Ansteuerungswert 64 (im Ausführungsbeispiel z.B. entsprechend dem unbestromten Zustand der elektromagnetischen Zustand der elektromagnetischen Betätigungseinrichtung 34) ist das Mengensteuerventil 30 im geöffneten Zustand 60. Wird das Ansteuersignal ausgehend vom ersten Ansteuerungswert 66 in Richtung des zweiten Ansteuerungswertes verändert (im Ausführungsbeispiel: verringert), so beginnt das Mengensteuerventil 30 bei einem Grenzansteuerungswert 72 zu öffnen. Bedingt durch die von Exemplar zu Exemplar unterschiedlichen Eigenschaften des Mengensteuerventils ergibt sich eine Streubreite 90 des Grenzansteuerungswertes zwischen einer oberen Streugrenze 74 und einer unteren Streugrenze 76.

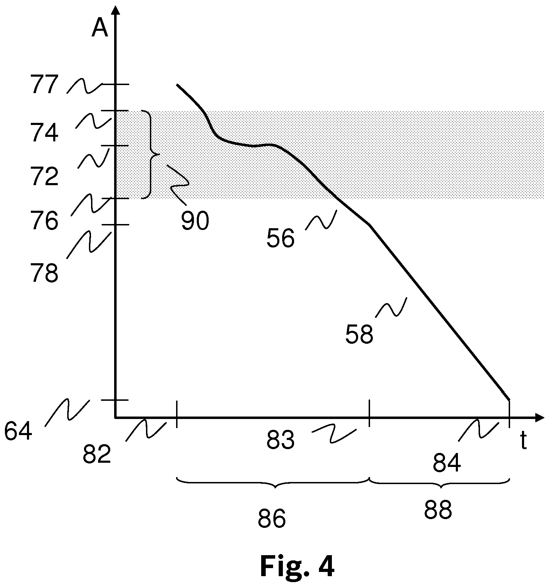

Figur 4 zeigt den erfindungsgemäßen Verlauf des Ansteuersignals A über der Zeit t während des fallenden Signalverlaufs 56. Zu einem ersten Zeitpunkt 82 ist der Wert des Ansteuerungsignals gleich einem ersten Signalwert 77, zu einem zweiten Zeitpunkt 83 ist der Wert des Ansteuerungsignals gleich einem zweiten Signalwert 78. Zu einem dritten Zeitpunkt 84 ist der Wert des Ansteuerungssignals gleich dem zweiten Ansteuerungswert. Erfindungsgemäß ist hierbei der erste Signalwert 77 größer als die obere Streugrenze 74. Damit ist für alle Exemplare des Mengensteuerventils 30 sichergestellt, dass sie sich zum ersten Zeitpunkt 82 im geschlossenen Zustand befinden. Erfindungsgemäß ist der zweite Signalwert 78 kleiner als die untere Streugrenze 76. Damit ist für alle Exemplare des Mengensteuerventils 30 sichergestellt, dass ihnen zum zweiten Zeitpunkt 83 ermöglicht ist, in den geöffneten Zustand überzugehen, falls nicht beispielsweise - wie oben beschrieben - der Druck im Förderraum 28 das Mengensteuerventil 30 im geschlossenen Zustand hält. Wird das Mengensteuerventil 30 nicht durch beispielsweise den Druck im Förderraum 28 im geschlossenen Zustand gehalten, so ist zum Zeitpunkt 83 sichergestellt, dass sich alle Exemplare des Mengensteuerventils 30 zu öffnen beginnen, dass sich also der Betätigungstößel 48 in Bewegung setzt. Ab dem dritten Zeitpunkt 84 ist der Wert des Ansteuerungssignals auf den zweiten Ansteuerungswert 64 abgefallen, sodass das Mengensteuerungsventil erst kurz vor dem dritten Zeitpunkt 84 vollständig öffnen kann. Durch die Bewegung des Betätigungstößels 48 in der Magnetspule 44 ein Magnetfeld induziert, das eine Gegenkraft auf den Betätigungsstößel 48 bewirkt. Erfindungsgemäß wird bewirkt, dass zum zweiten Zeitpunkt 83 auf alle Exemplare des Mengensteuerventils 30 eine durch die Bewegung des Betätigungsstößels 48 induzierte magnetische Gegenkraft und eine dem Zustand des Mengensteuerventils 30 bzw. dem Wert des Ansteuersignals entsprechende Kraft wirkt.

Erfindungsgemäß wird erkannt, dass durch einen hinreichend flachen ersten fallenden Signalverlauf 56 und/oder durch einen hinreichend flachen zweiten fallenden Signalverlauf 58 die Bewegung des Betätigungsstößels derart verlangsamt werden kann, dass die Abstrahlung hörbaren Schalls beim Auftreffen auf den ersten Anschlag 50 verringert wird. Erfindungsgemäß wird erkannt, dass dieser hinreichend flache Verlauf durch einen hinreichend großen ersten zeitlichen Abstand 86 zwischen dem zweiten Zeitpunkt 83 und dem ersten Zeitpunkt 82 und/oder durch einen hinreichend großen zeitlichen Abstand 88 zwischen dem dritten Zeitpunkt 84 und dem zweiten Zeitpunkt 83 erreicht werden kann. Beispielsweise sollen der erste zeitliche Abstand 86 und/oder der zweite zeitliche Abstand 88 um einen Faktor größer gewählt werden, als die Zeit, die das Mengensteuerventil 30 bei Ansteuerung mit dem zweiten Ansteuerwert 64 zum Schließen benötigt. Beispielsweise kann dieser Faktor 1, 2, 5 oder 10 betragen. Beispielsweise ist es aber auch möglich, die Zeitspanne 88 kurz zu wählen (beispielsweise den zweiten fallenden Verlauf mit einer Schnelllöschung darzustellen), wenn sichergestellt ist, dass das Mengensteuerventil 30 zum zweiten Zeitpunkt 83 hinreichend weit geschlossen ist. Erfindungsgemäß wird erkannt, dass dies beispielsweise durch einen hinreichend niedrigen zweiten Signalwert 78 erreicht werden kann.

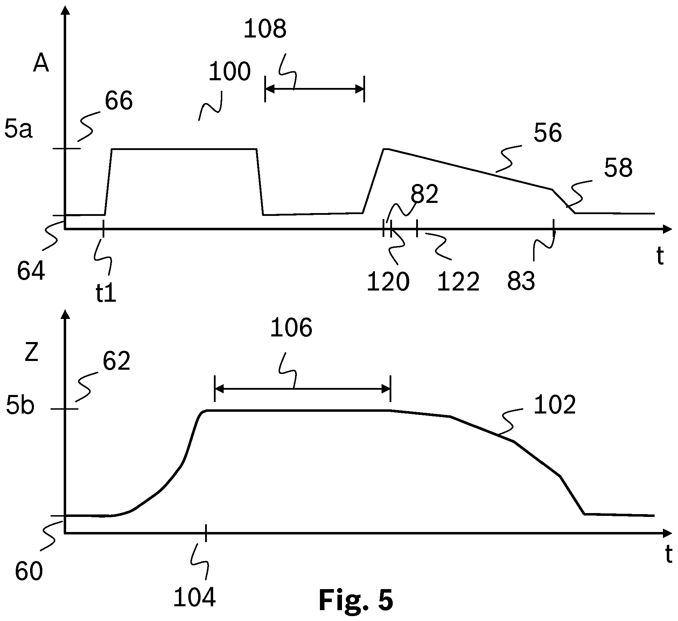

Figur 5 zeigt den zeitlichen Verlauf 100 des mit "A" bezeichneten Ansteuerungssignals und den zeitlichen Verlauf 102 des mit "Z" bezeichneten Zustands des Mengensteuerventils 30. Zum Zeitpunkt t1 wird der Wert des Ansteuerungssignals vom zweiten Ansteuerungswert 64 auf den ersten Ansteuerungswert 66 erhöht. Hierdurch geht das Mengensteuerventil 30 vom geöffneten Zustand 60 in den geschlossenen Zustand 62 über und schließt zum Zeitpunkt 104. Während einer Haltephase 106 bleibt das Mengensteuerventil 30 geschlossen. Bedingt durch den Druck im Förderraum 28, der das Mengensteuerventil 30 geschlossen hält, kann das Ansteuerungssignal während eines Zeitraums 108 den zweiten Ansteuerungswert 64 annehmen, also beispielsweise unbestromt sein. Vor dem Erreichen des oberen Totpunkts 120 des Förderkolbens 24 bzw. vor dem Öffnen 122 des Auslassventils 32 wird der Wert des Ansteuerungssignals wieder auf den ersten Ansteuerungswert 66 angehoben. Zum Zeitpunkt 82 wird das Ansteuerungssignal in Form des in Figur 4 beschriebenen fallenden Verlaufs geschaltet.

Damit die Bewegung des Betätigungstößels 48 beim Schließen wirkungsvoll abgebremst wird, wird erfindungsgemäß erkannt, dass der Wert des Ansteuerungssignal zu dem Zeitpunkt, an dem der Druck im Förderraum 28 soweit abgefallen ist, dass er das Mengensteuerventil 30 nicht mehr im geschlossenen Zustand 62 hält, hinreichend nah am ersten Ansteuerungswert 66 liegen muss. Erfindungsgemäß wird dies dadurch erreicht, dass der erste Zeitpunkt 82 und/oder der zweite Zeitpunkt 83 zeitlich hinter dem oberen Totpunkt 120 und/oder nach dem Öffnen 122 des Auslassventils 32 liegt.
Alternativ zur gezeigten Ausführungsform ist es möglich, dass das Ansteuerungssignal während der Zeitdauer 108 beispielsweise durchgehend auf dem ersten Ansteuerungswert 66 gehalten wird.

## Patentansprüche

1. Verfahren zur Ansteuerung eines Mengensteuerventils (30), wobei das Mengensteuerventil (30) bei Ansteuerung mit einem ersten Ansteuerungswert (66) einen geschlossenen Zustand (62) einnimmt und die Ansteuerung mit einem zweiten Ansteuerungswert (64) dem Mengensteuerventil (30) ermöglicht, einen geöffneten Zustand (60) einzunehmen, wobei das Ansteuersignal von einem ersten Signalwert (77) zu einem ersten Zeitpunkt (82) zu einem zweiten Signalwert (78) zu einem zweiten Zeitpunkt (83) abfällt,
dass das Ansteuersignal von diesem zweiten Signalwert (78) zu diesem zweiten Zeitpunkt (83) zum zweiten Ansteuerungswert (64) zu einem dritten Zeitpunkt (84) abfällt,
dass das Mengensteuerventil (30) sich zum ersten Zeitpunkt (82) im geschlossenen Zustand befindet, zum zweiten Zeitpunkt (83) ermöglicht ist, dass es sich zu öffnen beginnt und sich kurz vor dem dritten Zeitpunkt (84) vollständig öffnen kann
wobei für Ansteuersignale oberhalb des ersten Signalwerts (77) das Mengensteuerventil (30) im geschlossenen Zustand (62) ist dass für Ansteuersignale unterhalb des zweiten Signalwerts (78) das Mengensteuerventil (30) nicht im geschlossenen Zustand (62) ist mit einem hinreichend großer ersten zeitlichen Abstand (86) zwischen dem zweiten Zeitpunkt (83) und dem ersten Zeitpunkt (82) und/oder mit einem hinreichend großer zeitlichen Abstand (88) zwischen dem zweiten Zeitpunkt (83) und dem dritten Zeitpunkt (84) **dadurch gekennzeichnet, dass** der zeitliche Abstand (88) zwischen dem dritten Zeitpunkt (84) und dem zweiten Zeitpunkt (83) um einen ersten Faktor länger ist als die Zeit, die das Mengensteuerventils (30) bei einem Ansteuersignal unterhalb des zweiten Ansteuerungswerts (64) benötigt, um vom geschlossenen Zustand (62) in den geöffneten Zustand (60) überzugehen.

2. Verfahren nach einem der vorhergehenden Ansprüche, **dadurch gekennzeichnet, dass** das Ansteuersignal vom Zeitpunkt (104) des Schließens des Mengensteuerventils (30) bis zum ersten Zeitpunkt (82) zeitweise unterhalb des zweiten Ansteuerungswerts (64) liegt.

3. Verfahren nach Anspruch 1, **dadurch gekennzeichnet, dass** das Ansteuersignal vom Zeitpunkt (104) des Schließens des Mengensteuerventils (30) bis zum ersten Zeitpunkt (82) dauerhaft über dem zweiten Ansteuerungswert (64) liegt.

4. Verfahren nach einem der vorhergehenden Ansprüche, **dadurch gekennzeichnet, dass** der zeitliche Abstand (86) zwischen dem zweiten Zeitpunkt (83) und dem ersten Zeitpunkt (82) um einen zweiten Faktor länger ist als die Zeit, die das Mengensteuerventils (30) bei einem Ansteuersignal unterhalb des zweiten Ansteuerungswert (64) benötigt, um vom geschlossenen Zustand (62) in den geöffneten Zustand (60) überzugehen.

5. Verfahren nach einem der vorhergehenden Ansprüche, **dadurch gekennzeichnet, dass** der erste Zeitpunkt (82) und/oder der zweite Zeitpunkt (83) hinter einem oberen Totpunkt (120) einer Hochdruckpumpe (16) oder dem Zeitpunkt (122) des Öffnens eines Auslassventils (32) liegt.

6. Verfahren nach einem der vorhergehenden Ansprüche, **dadurch gekennzeichnet, dass** das Mengensteuerventil (30) mit einer elektromagnetischen Aktorik (34) kombiniert ist, und der erste Ansteuerungswert (66) des Ansteuersignals einem bestromten Zustand der Aktorik (34) entspricht und der zweite Ansteuerungswert (64) des Ansteuersignals einem unbestromten Zustand.

7. Computerprogramm, **dadurch gekennzeichnet, dass** es zur Durchführung eines Verfahrens nach einem der vorhergehenden Ansprüche programmiert ist.

8. Elektrisches Speichermedium für eine Steuer- und/oder Regeleinrichtung (54) eines Kraftstoff-Einspritzsystems (10), **dadurch gekennzeichnet, dass** auf ihm ein Computerprogramm zur Durchführung eines Verfahrens der Ansprüche 1 bis 7 abgespeichert ist.

9. Steuer- und/oder Regeleinrichtung (54) für ein Kraftstoff-Einspritzsystem (10), **dadurch gekennzeichnet, dass** sie zur Durchführung eines Verfahrens nach einem der Ansprüche 1 bis 6 programmiert ist.

## Claims

1. Method for actuating an amount control valve (30), the amount control valve (30) assuming a closed state (62) when actuated with a first actuation value (66), and the actuation with a second actuation value (64) permitting the amount control valve (30) to assume an opened state (60),
the actuation signal falling from a first signal value (77) at a first time (82) to a second signal value (78) at a second time (83),
that the actuation signal falls from this second signal value (78) at this second time (83) to the second actuation value (64) at a third time (84), that the amount control valve (30) is in the closed state at the first time (82), it being made possible at the second time (83) that it begins to open and can open completely shortly before the third time (84),
the amount control valve (30) being in the closed state (62) for actuation signals above the first signal value (77),
that the amount control valve (30) is not in the closed state (62) for actuation signals below the second signal value (78),
with a sufficiently large first time interval (86) between the second time (83) and the first time (82) and/or with a sufficiently large time interval (88) between the second time (83) and the third time (84),
**characterized in that**
the time interval (88) between the third time (84) and the second time (83) is longer by a first factor than the time needed by the amount control valve (30) to change from the closed state (62) to the opened state (60) with an actuation signal below the second actuation value (64).

2. Method according to one of the preceding claims, **characterized in that** the actuation signal lies temporarily below the second actuation value (64) from the time (104) of the closure of the amount control valve (30) to the first time (82).

3. Method according to Claim 1, **characterized in that** the actuation signal lies permanently above the second actuation value (64) from the time (104) of the closure of the amount control valve (30) to the first time (82).

4. Method according to one of the preceding claims, **characterized in that** the time interval (86) between the second time (83) and the first time (82) is longer by a second factor than the time needed by the amount control valve (30) to change from the closed state (62) to the opened state (60) with an actuation signal below the second actuation value (64).

5. Method according to one of the preceding claims, **characterized in that** the first time (82) and/or the second time (83) is located after the top dead centre point (120) of a high-pressure pump (16) or the time (122) at which an outlet valve (32) opens.

6. Method according to one of the preceding claims, **characterized in that** the amount control valve (30) is combined with an electromagnetic actuator (34), and the first actuation value (66) of the actuation signal corresponds to an energised state of the actuator (34), and the second actuation value (64) of the actuation signal corresponds to a non-energised state.

7. Computer program, **characterized in that** it is programmed to carry out a method according to one of the preceding claims.

8. Electric storage medium for an open-loop and/or closed-loop control apparatus (54) of a fuel injection system (10), **characterized in that** a computer program for carrying out a method of Claims 1 to 7 is stored thereon.

9. Open-loop and/or closed-loop control apparatus (54) for a fuel injection system (10), **characterized in that** it is programmed to carry out a method according to one of Claims 1 to 6.

## Revendications

1. Procédé d'attaque d'une vanne de commande de volume (30), la vanne de commande de volume (30) adoptant un état fermé (62) lors de l'attaque avec une première valeur d'attaque (66) et l'attaque avec une deuxième valeur d'attaque (64) permettant à la vanne de commande de volume (30) d'adopter un état ouvert (60),
le signal d'attaque chutant d'une première valeur de signal (77) à un premier instant (82) vers une deuxième valeur de signal (78) à un deuxième instant (83),
que le signal d'attaque chutant de cette deuxième valeur de signal (78) au deuxième instant (83) vers la deuxième valeur d'attaque (64) à un troisième instant (84),
que la vanne de commande de volume (30) se trouvant à l'état fermé au premier instant (82), avec la possibilité qu'elle commence à s'ouvrir au deuxième instant (83) et puisse complètement s'ouvrir peu de temps avant le troisième instant (84),
la vanne de commande de volume (30) se trouvant dans l'état fermé (62) pour les signaux d'attaque au-dessus de la première valeur de signal (77),
que la vanne de commande de volume (30) ne se trouvant pas dans l'état fermé (62) pour les signaux d'attaque au-dessous de la deuxième valeur de signal (78),
avec un premier intervalle de temps (86) suffisamment grand entre le deuxième instant (83) et le premier instant (82) et/ou
avec un intervalle de temps (88) suffisamment grand entre le deuxième instant (83) et le troisième instant (84),
**caractérisé en ce que**
l'intervalle de temps (88) entre le troisième instant (84) et le deuxième instant (83) est plus long d'un premier facteur que le temps nécessaire à la vanne de commande de volume (30) pour passer de l'état fermé (62) à l'état ouvert (60) en présence d'un signal d'attaque au-dessous de la deuxième valeur d'attaque (64) .

2. Procédé selon l'une des revendications précédentes, **caractérisé en ce que** le signal d'attaque, entre l'instant (104) de la fermeture de la vanne de commande de volume (30) et le premier instant (82), se trouve temporairement au-dessous de la deuxième valeur d'attaque (64).

3. Procédé selon la revendication 1, **caractérisé en ce que** le signal d'attaque, entre l'instant (104) de la fermeture de la vanne de commande de volume (30) et le premier instant (82), se trouve continuellement au-dessus de la deuxième valeur d'attaque (64).

4. Procédé selon l'une des revendications précédentes, **caractérisé en ce que** l'intervalle de temps (86) entre le deuxième instant (83) et le premier instant (82) est plus long d'un deuxième facteur que le temps nécessaire à la vanne de commande de volume (30) pour passer de l'état fermé (62) à l'état ouvert (60) en présence d'un signal d'attaque au-dessous de la deuxième valeur d'attaque (64).

5. Procédé selon l'une des revendications précédentes, **caractérisé en ce que** le premier instant (82) et/ou le deuxième instant (83) se trouvent derrière un point mort haut (120) d'une pompe à haute pression (16) ou l'instant (122) de l'ouverture d'une vanne d'évacuation (32).

6. Procédé selon l'une des revendications précédentes, **caractérisé en ce que** la vanne de commande de volume (30) est combinée avec un système actionneur électromagnétique (34), et la première valeur d'attaque (66) du signal d'attaque correspond à un état de mise sous tension du système actionneur (34) et la deuxième valeur d'attaque (64) du signal d'attaque à un état hors tension.

7. Programme informatique, **caractérisé en ce qu'**il est programmé pour mettre en oeuvre un procédé selon l'une des revendications précédentes.

8. Support d'enregistrement électrique pour un dispositif de commande et/ou de régulation (54) d'un système d'injection de carburant (10), **caractérisé en ce que** sur celui-ci est enregistré un programme informatique destiné à mettre en oeuvre un procédé selon l'une des revendications 1 à 7.

9. Dispositif de commande et/ou de régulation (54) d'un système d'injection de carburant (10), **caractérisé en ce qu'**il est programmé pour mettre en oeuvre un procédé selon l'une des revendications 1 à 6.
